# EUROPÄISCHE PATENTANMELDUNG

(11) **EP 2 443 963 A1**
(43) Veröffentlichungstag der Anmeldung: **25.04.2012**
(21) Anmeldenummer: 10013938.5
(22) Anmeldetag: 25.10.2010
(51) Int. Cl.: A47B 13/00, F16B 12/42

(54) **Verbindungsbeschlag**

(71) Anmelder: Palmberg Büroeinrichtungen + Service GmbH, 23923 Schönberg (DE)
(72) Erfinder: Himmelreich, Alexander, 31592 Stolzenau (DE)
(74) Vertreter: Manasse, Uwe

(57) **Zusammenfassung**

Verbindungsbeschlag zur Befestigung einer Platte, insbesondere einer Holzplatte, auf einem Möbelrahmen, wie zum Beispiel einem Tisch- oder Schrankrahmen, umfassend,
- ein Befestigungselement mit einer Befestigungseinrichtung an seiner Unterseite zur Befestigung an der Unterseite einer Platte und einer Befestigungsschiene mit einer Einraststruktur an seiner Oberseite,
- ein Rastelement, das die Befestigungsschiene umgreifend auf dem Befestigungselement verschiebbar und mittels elastischer Rastnasen in der Einraststruktur verrastbar anordbar ist und
- ein Verschlußelement, das das Rastelement umgreifend in Längsrichtung der Befestigungsschiene des Befestigungselements auf das Rastelement bis zu einer ersten Verrastungsposition schiebbar ist, in der es gemeinsam mit dem Rastelement auf der Befestigungsschiene des Befestigungselements weiter in der Aufschieberichtung verschiebbar ist sowie aus der es bei Anschlag oder Anlage des Rastelements an einem Möbelrahmen entrastbar und noch weiter auf dem Rastelement in der Aufschieberichtung in eine zweite Verrastungsposition verschiebbar ist, in der es die elastischen Rastnasen des Rastelements verriegelt, so dass das Rastelement auf der Befestigungsschiene lösbar arretiert ist, und gleichzeitig mit seinem in der Aufschieberichtung vorderen Ende mit dem Möbelrahmen in Eingriff tritt und ihn in einer von der Unterseite der Platte aufrechten Richtung arretiert.

## Beschreibung

Die vorliegende Erfindung betrifft einen Verbindungsbeschlag zur Befestigung einer Platte, insbesondere einer Holzplatte, auf einem Möbelrahmen, wie zum Beispiel einem Tischen-oder Schrankrahmen.

Beispielsweise die Befestigung einer Tischplatte an einem Tischrahmen kann sehr mühselig sein.

Der Erfindung liegt somit die Aufgabe zugrunde, eine einfache und zuverlässige Befestigung einer Platte, wie zum Beispiel einer Holzplatte, an einem Möbelrahmen, wie zum Beispiel einem Tischrahmen oder einem Schrankrahmen, zu ermöglichen.

Erfindungsgemäß wird diese Aufgabe gelöst durch einen Verbindungsbeschlag zur Befestigung einer Platte, insbesondere einer Holzplatte, auf einem Möbelrahmen, wie zum Beispiel einem Tisch- oder Schrankrahmen, umfassend,
- ein Befestigungselement mit einer Befestigungseinrichtung an seiner Unterseite zur Befestigung an der Unterseite einer Platte und einer Befestigungsschiene mit einer Einraststruktur entlang der Befestigungsschiene an seiner Oberseite,
- ein Rastelement, das die Befestigungsschiene umgreifend auf dem Befestigungselement verschiebbar und mittels elastischer Rastnasen in der Einraststruktur verrastbar anordbar ist und
- ein Verschlußelement, das das Rastelement umgreifend in Längsrichtung der Befestigungsschiene des Befestigungselements auf das Rastelement bis zu einer ersten Verrastungsposition schiebbar ist, in der es gemeinsam mit dem Rastelement auf der Befestigungsschiene des Befestigungselements weiter in der Aufschiebrichtung verschiebbar ist sowie aus der es bei Anschlag oder Anlage des Rastelements an einem Möbelrahmen entrastbar und noch weiter auf dem Rastelement in der Aufschieberichtung in eine zweite Verrastungsposition verschiebbar ist, in der es die elastischen Rastnasen des Rastelements verriegelt, so dass das Rastelement auf der Befestigungsschiene lösbar arretiert ist, und gleichzeitig mit seinem in der Aufschieberichtung vorderen Ende mit dem Möbelrahmen in Eingriff tritt und ihn in einer von der Unterseite der Platte aufrechten Richtung arretiert.

Vorteilhafterweise umfaßt die Befestigungseinrichtung mindestens eine Spreizmuffe, vorzugsweise Kunststoffspreizmuffe, und/oder einen Spreizdübel, vorzugsweise Kunststoffspreizdübel, die/der in eine vorgesehene Öffnung, insbesondere eine vorgebohrte Bohrung, in der Platte einsetzbar und vorzugsweise durch eine Schraube aufweitbar und arretierbar ist/sind. Es sind aber auch andere Befestigungseinrichtungen denkbar.

Gemäß einer besonderen Ausführungsform umfasst die Einraststruktur auf mindestens einer Außenschmalseite der Befestigungsschiene eine Reihe von nebeneinander angeordneten Rastzähnen. Die Einraststruktur kann aber auch an einer anderen Stelle vorgesehen sein.

Zweckmäßigerweise sind die elastischen Rastnasen mittig auf jeder Außenschmalseite des Rastelements in Durchbrüchen angeordnet und im entriegelten Zustand nach außen über die Außenkontur des Rastelements hinaus elastisch verbiegbar. Die Durchbrüche können sich aber auch an anderen Positionen befinden.

Vorteilhafterweise weist das Verschlußelement am vorderen Ende innen zu beiden Außenschmalseiten hin Freimachungen auf und befinden sich die Rastnasen in der ersten Verrastungsposition im Bereich der Freimachungen. Die Freimachungen können sich aber auch an anderen Positionen befinden.

Gemäß einer weiteren besonderen Ausführungsform der Erfindung weist das Verschlußelement auf seiner oberen Innenseite mindestens eine Rastnase auf und weißt das Rastelement auf seiner oberen Außenseite zwei in Längsrichtung beabstandete zu der mindestens einem Rastnase komplementäre Einraststrukturen zum Einrastenlassen der mindestens einen Rastnase in der jeweiligen ersten bzw. zweiten Verrastungsposition auf. Die Rastnase(n) und Einraststrukturen können sich aber auch an anderen Positionen befinden.

Schließlich ist/sind vorteilhafterweise das Befestigungselement und/oder das Rastelement und/oder das Verschlußelement aus Kunststoff.

Der Erfindung liegt die überraschende Erkenntnis zugrunde, dass durch den erfindungsgemäßen Verbindungsbeschlag eine einfache und zuverlässige Befestigung beispielsweise einer Tischplatte an einem Tischrahmen ermöglicht wird. Dabei lassen sich zumindest das Rastelement und das Verschlußelement werkzeuglos handhaben. Darüber hinaus ermöglicht der Verbindungsbeschlag auch einen Toleranzausgleich zwischen beispielsweise einer Tischplatte und einem Tischrahmen.

Weitere Merkmale und Vorteile der Erfindung ergeben sich aus den beigefügten Ansprüchen und der nachfolgenden Beschreibung, in der ein Ausführungsbeispiel anhand der schematischen Zeichnungen im Einzelnen erläutert ist. Dabei zeigt/zeigen:
- Figur I: eine Explosionsansicht von einem Verbindungsbeschlag gemäß einer besonderen Ausführungsform der Erfindung schräg von oben;
- Figur 2: den Verbindungsbeschlag von Figur 1 in einer Explosionsansicht schräg von unten;
- Figuren 3 bis 8: die Verwendung des Verbindungsbeschlags gemäß den Figuren 1 und 2 zur Befestigung einer Tischplatte aus Holz auf einem Tischrahmen in mehreren aufeinander folgenden Montagestadien in perspektivischer Ansicht;
- Figuren 6A, 7A und 8A: das jeweilige Montagestadium zusätzlich in seitlicher Schnittansicht und
- Figuren 6B, 7B, sowie 8B: zusätzlich in Schnittansicht von oben, das heißt in Draufsicht auf die Unterseite der Tischplatte.

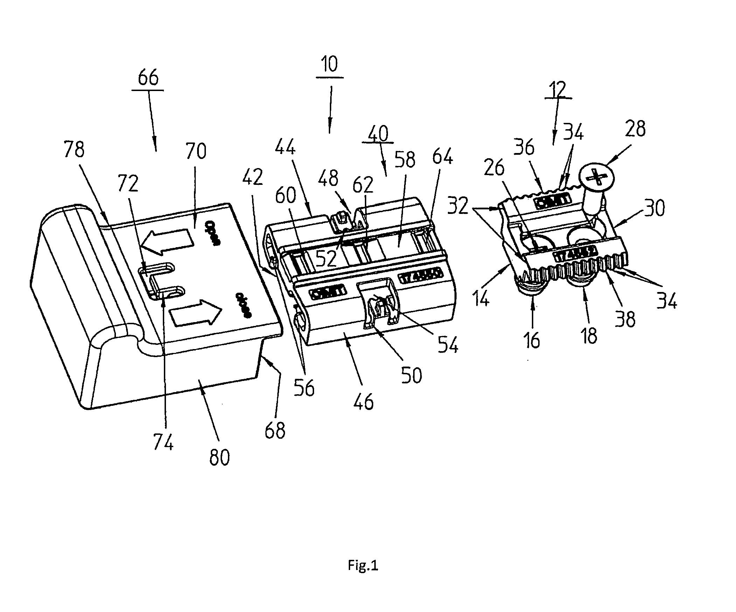

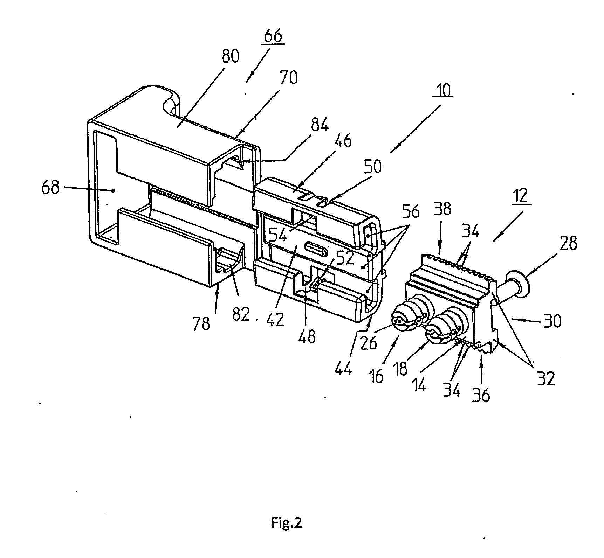

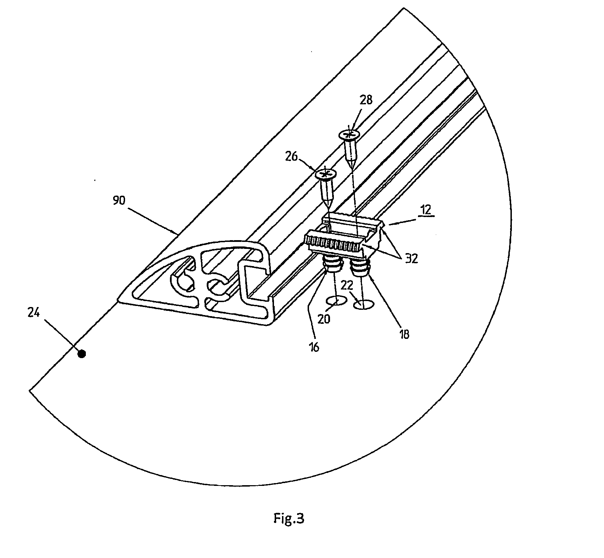

Der in den Figuren 1 und 2 gezeigte Verbindungsbeschlag 10 umfasst ein Befestigungselement 12, dass an seiner Unterseite 14 zwei Spreizdübel 16, 18 aufweist, die in einer jeweiligen vorgebohrten Bohrung 20 bzw. 22 (siehe Figuren 3, 6A, 7A und 8A) in einer Platte 24, hier einer Tischplatte, einsetzbar und durch eine jeweilige Schraube 26 bzw. 28 aufweitbar und in der jeweiligen Bohrung 20 bzw. 22 arretierbar sind. Des weiteren weist das Befestigungselement 12 an seiner Oberseite 30 eine Befestigungsschiene 32 mit einer Einraststruktur aus einer Reihe von nebeneinander angeordneten Rastzähnen, von denen nur einige mit der Bezugszahl 34 gekennzeichnet sind, auf jeder ihrer beiden Außenschmalseiten 36 und 38 auf.

Des weiteren weist der Verbindungsbeschlag 10 ein Rastelement 40 auf, das zum Umgreifen der Befestigungsschiene 32 einem Hohlraum bzw. Kanal 56 aufweist und an seiner Unterseite 42 teilweise offen ist. In Längsrichtung des Rastelements 40 weist es mittig auf jeder Außenschmalseite 44 und 46 jeweils einen Durchbruch 48 bzw. 50 auf, in dem sich jeweils mittig eine elastische Rastnase 52 bzw. 54 befindet. Der Hohlraum bzw. Kanal 56 in dem Rastelement 40 ist so gestaltet und dimensioniert, dass darin die Befestigungsschiene 32 verschiebbar ist, wobei dies nur möglich ist, wenn sich die Rastnasen 52 und 54 ― durch die Rastzähne 34 veranlasst- nach außen elastisch verbiegen können. Gleichzeitig dienen die Rastnasen 52 und 54 zum wiederlösbaren Verrasten des Rastelements 40 auf dem Befestigungselement 12. Mit anderen Worten lässt sich das Rastelement 40 nur auf der Befestigungsschiene 32 verschieben, wenn eine ausreichende Kraft in Längsrichtung ausgeübt wird.

Des weiteren verfügt das Rastelement 40 auf seiner oberen Außenseite 58 über drei in Längsrichtung, das heißt Verschiebe- bzw. Aufschieberichtung, gleichmäßig beabstandete Einrastausnehmungen 60, 62 und 64. Die an den beiden Längsenden angeordneten Einrastausnehmungen 60 und 64 dienen zur Verrastung mit einem ebenfalls zum Verbindungsbeschlag 10 gehörigen Verschlußelement 66 in einer ersten Verrastungsposition, und zwar je nach dem, ob das Verschlußelement 66 auf das eine oder andere Längsende des Rastelements 40 geschoben wird.

Die mittige Einrastausnehmung 62 dient zur Verrastung mit dem Verschlußelement 66 in einer zweiten Verriegelungsposition.

Das Verschlußelement 66 weist ebenfalls einen Hohlraum 68 (siehe zum Beispiel Figur 2) auf, der nach unten teilweise offen ist, um das Rastelement 40 umgreifend in Längsrichtung der Befestigungsschiene 32 des Befestigungselements bis zur ersten Verrastungsposition schieb- bzw. aufschiebbar zu sein. Zum Verrasten in der ersten Verrastungsposition weist das Verschlußelement 66 an seiner Oberseite 70 einen Durchbruch 72 auf, in dem eine nach unten gewandte Rastnase 74 angeordnet ist. Besagte Rastnase 74 rastet in der ersten Verrastungsposition je nach Aufschieberichtung des Verschlußelements 66 in der Einrastausnehmung 60 oder 64 ein. Aufgrund von an seinem vorderen Ende 76 innen zu beiden Außenschmalseiten 78 und 80 hin vorgesehenen Freimachungen 82 und 84 können die Rastnasen 52 und 54 in der ersten Verrastungsposition immer noch elastisch nach außen verbogen werden, wodurch immer noch ein Verschieben des Rastelements 40 gemeinsam mit dem Verschlußelement 66 relativ zum Befestigungselement 12 möglich ist.

Die Pfeile 86 und 88 auf der Oberseite 70 des Verschlußelements 66 zeigen für einen Benutzer, wie zum Beispiel Monteur, die Verschiebemöglichkeiten für das Verschlußelement 66 und durch die Aufschrift "open" und "close" auch die Betätigungsrichtung zum Verbinden/Verriegeln bzw. Entkoppeln an.

Die Figuren 3 bis 8 zeigen nun, wie der erfindungsgemäße Verbindungsbeschlag 10 montiert werden kann, um die Platte 24 an einem Profil 90 eines Tischrahmens zu befestigen.

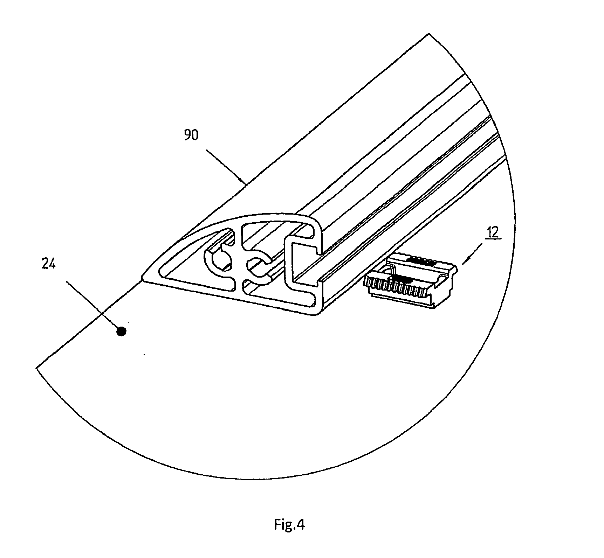

Zunächst einmal werden die Spreizdübel 16 und 18 des Befestigungselements 12 in die Bohrungen 20 und 22 eingesetzt und mit den Schrauben 26 und 28 darin arretiert (siehe Figuren 3 und 4). Die Bohrungen 20 und 22 sind dabei so angeordnet, dass die Befestigungsschiene 32 des Befestigungselements 12 im rechten Winkel zum Profil 90 verläuft (siehe Figur 4).

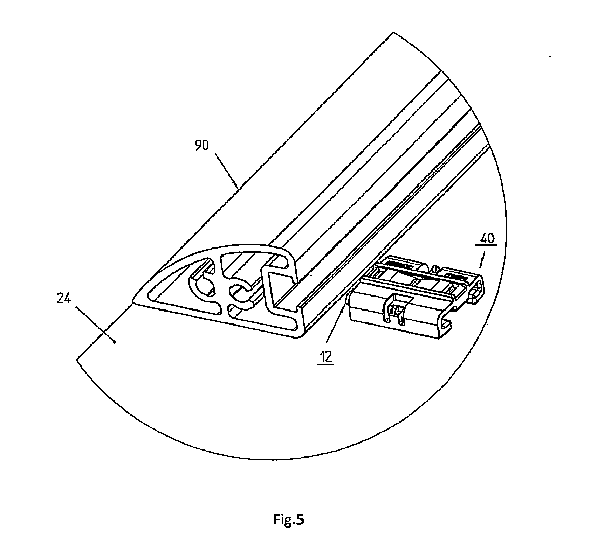

Danach wird das Rastelement 40 auf das von dem Profil 90 abgewandte Längsende des Befestigungselements 12, genauer gesagt der Befestigungsschiene 32 geschoben (siehe Figur 5). Im dargestellten Fall wird das Rastelement 40 nur so weit geschoben, dass noch ein Abstand zwischen selbigem und dem Profil 90 übrig bleibt.

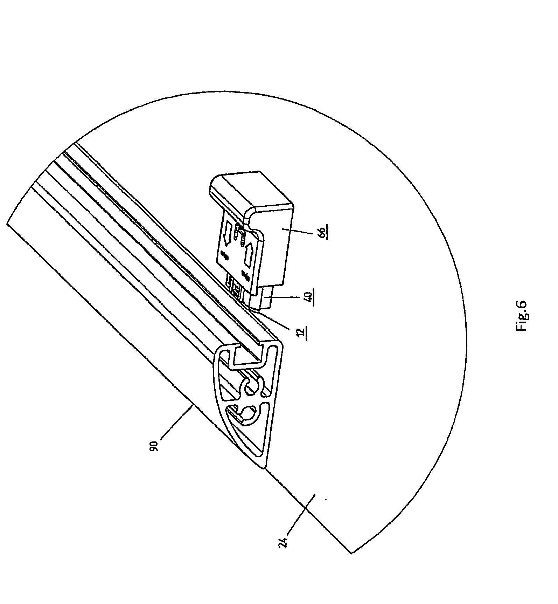

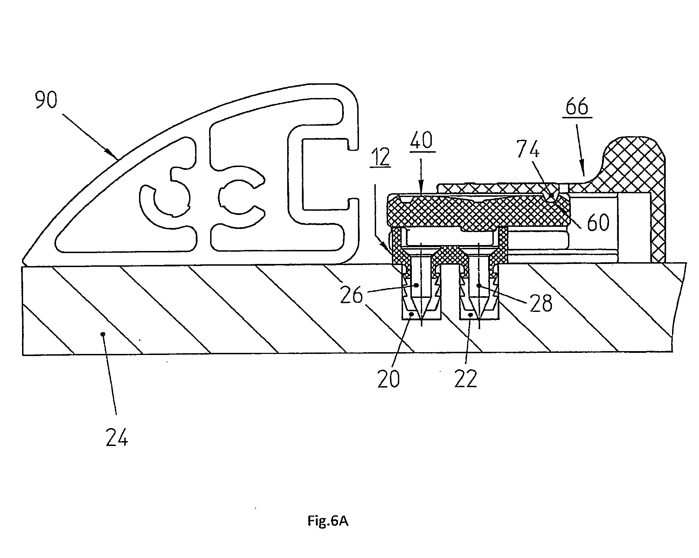

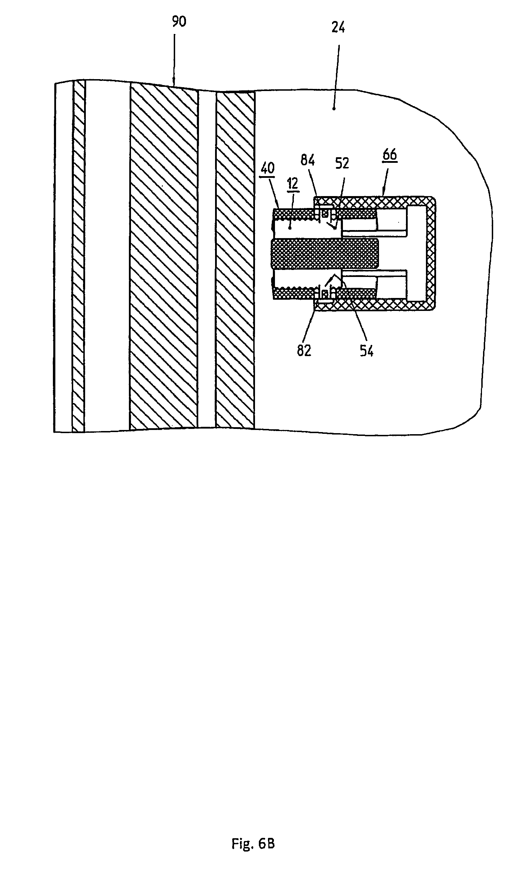

Wiederum danach wird das Verschlußelement 66 von derselben Seite wie das Rastelement 40 auf das Befestigungselement 12 auf das Rastelement 40 geschoben, bis die erste Verrastungsposition erreicht ist (siehe Figuren 6, 6A und 6B). In der ersten Verrastungsposition rastet die Rastnase 74 in die Einrastausnehmung 60 ein und befinden sich die elastischen Rastnasen 52 und 54 gerade im Bereich der Freimachungen 82 und 84. Bei weiterem Aufschieben des Verschlußelements 66 in Richtung zum Profil 90 bewegen sich somit das Rastelement 40 und das Verschlußelement 66 gemeinsam auf der Befestigungsschiene 32 auf das Profil 90 zu.

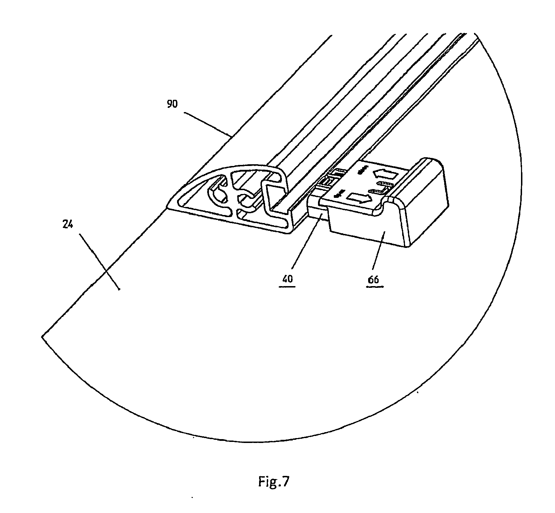

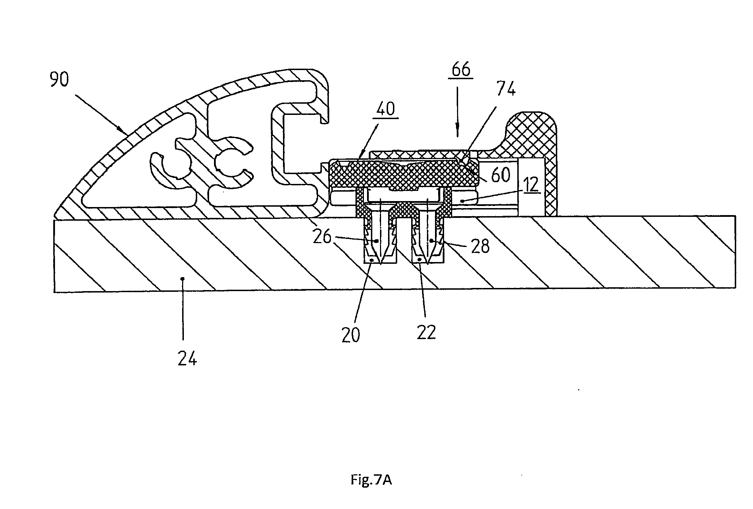

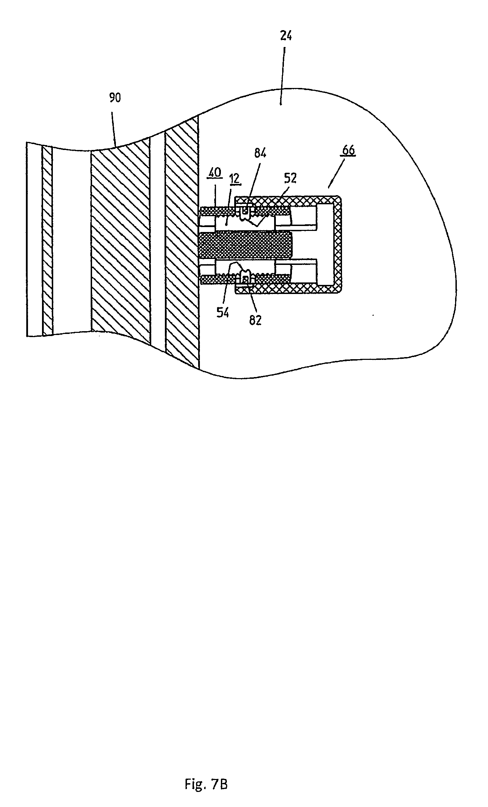

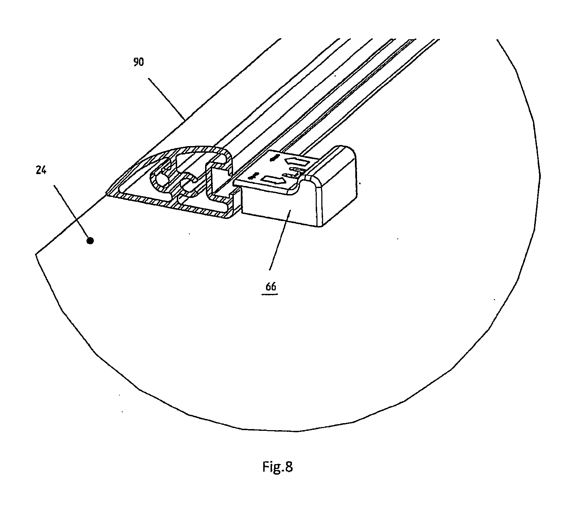

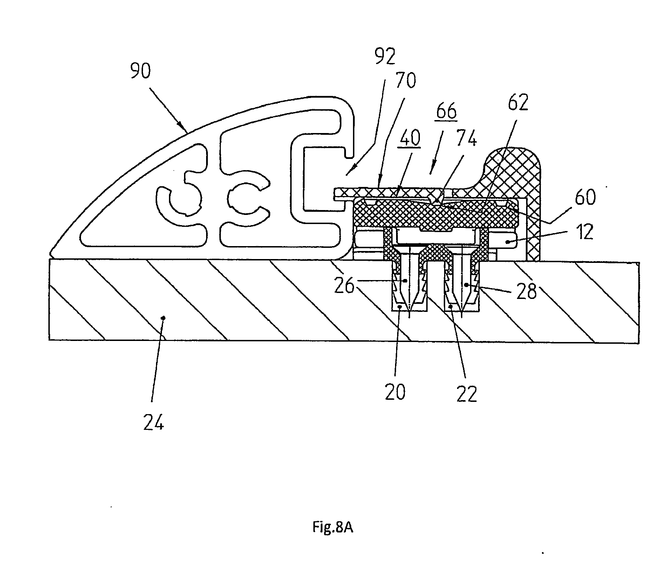

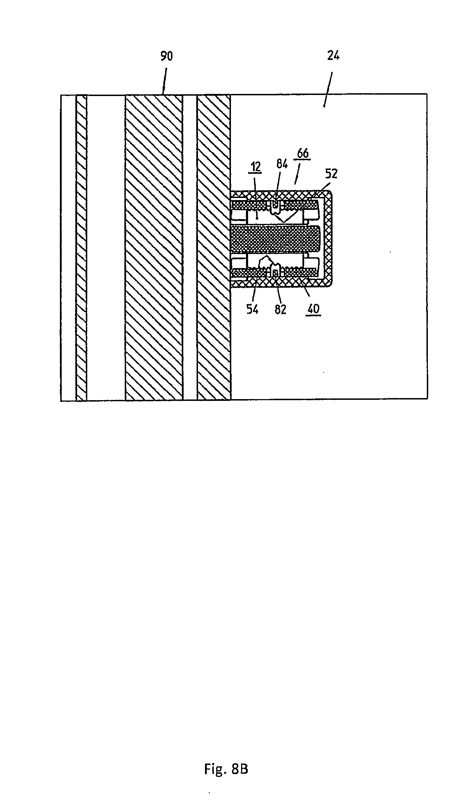

In den Figuren 7, 7A und 7B ist nun das Rastelement 40 mittels des Verschlußelements 66 bis an das Profil 90 herangeschoben worden, so dass es sich nicht mehr weiter bewegen kann. Das Verschlußelement 66 kann aber noch weiter, und zwar durch Entrasten der Rastnase 74 aus der Einrastausnehmung 60 und weiter schieben in Richtung auf das Profil 90 zu, in die zweite Verrastungsposition bewegt werden, in der die Rastnase 74 in die Einrastausnehmung 62 einrastet (siehe Figuren 8, 8A und 8B). Das vordere Ende des Verschlußelements, genauer gesagt die Oberseite 70 desselben ragt in der zweiten Verrastungsposition in eine entsprechende Ausnehmung 92 in das Profil 90 und verriegelt es somit in der von der Unterseite der Platte aufrechten Richtung. Mit einem einzigen Verbindungsbeschlag 10 erfolgt somit eine Verriegelung in der x- bzw. y- Ebene, wenn die Tischplatte eine x- y- Ebene aufspannt, und in einer z-Richtung. Durch zwei derartige Verbindungsbeschläge kann somit eine Verriegelung in allen drei Richtungen erfolgen.

Sowohl das Befestigungselement, als auch das Rastelement und das Verschlußelement sind aus Kunststoff.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: Verbindungsbeschlag
- 12: Befestigungselement
- 14: Unterseite
- 16, 18: Spreizdübel
- 20, 22: Bohrungen
- 24: Platte
- 26,28: Schrauben
- 30: Oberseite
- 32: Befestigungsschiene
- 34: Rastzähne
- 36, 38: Außenschmalseiten
- 40: Rastelement
- 42: Unterseite
- 44, 46: Außenschmalseiten
- 48, 50: Durchbrüche
- 52, 54: Rastnasen
- 56: Hohlraum
- 58: Außenseite
- 60, 62, 64: Einrastausnehmungen
- 66: Verschlußelement
- 68: Hohlraum
- 70: Oberseite
- 72: Durchbruch
- 74: Rastnase
- 76: Ende
- 78, 80: Außenschmalseiten
- 82, 84: Freimachungen
- 86, 88: Pfeile
- 90: Profil
- 92: Ausnehmung

## Patentansprüche

1. Verbindungsbeschlag (10) zur Befestigung einer Platte (24), insbesondere einer Holzplatte, auf einem Möbelrahmen, wie zum Beispiel einem Tisch- oder Schrankrahmen, umfassend,
- ein Befestigungselement (12) mit einer Befestigungseinrichtung an seiner Unterseite (14) zur Befestigung an der Unterseite einer Platte (24) und einer Befestigungsschiene (32) mit einer Einraststruktur entlang der Befestigungsschiene (32) an seiner Oberseite (30),
- ein Rastelement (40), das die Befestigungsschiene (32) umgreifend auf dem Befestigungselement (12) verschiebbar und mittels elastischer Rastnasen (52, 54) in der Einraststruktur verrastbar anordbar ist und
- ein Verschlußelement (66), das das Rastelement (40) umgreifend in Längsrichtung der Befestigungsschiene (32) des Befestigungselements (12) auf das Rastelement (40) bis zu einer ersten Verrastungsposition schiebbar ist, in der es gemeinsam mit dem Rastelement (40) auf der Befestigungsschiene (32) des Befestigungselements (12) weiter in der Aufschieberichtung verschiebbar ist sowie aus der es bei Anschlag oder Anlage des Rastelements (40) an einem Möbelrahmen entrastbar und noch weiter auf dem Rastelement (40) in der Aufschieberichtung in eine zweite Verrastungsposition verschiebbar ist, in der es die elastischen Rastnasen (52, 54) des Rastelements (40) verriegelt, so dass das Rastelement (40) auf der Befestigungsschiene (32) lösbar arretiert ist, und gleichzeitig mit seinem in der Aufschieberichtung vorderen Ende mit dem Möbelrahmen in Eingriff tritt und ihn in einer von der Unterseite der Platte (24) aufrechten Richtung arretiert.

2. Verbindungsbeschlag (10) nach Anspruch 1, **dadurch gekennzeichnet, dass** die Befestigungseinrichtung mindestens eine Spreizmuffe, vorzugsweise Kunststoffspreizmuffe, und/oder einen Spreizdübel (16, 18), vorzugsweise Kunststoffspreizdübel, die/der in eine vorgesehene Öffnung, insbesondere eine vorgebohrte Bohrung (20, 22), in der Platte (24) einsetzbar und vorzugsweise durch eine Schraube (26, 28) aufweitbar und arretierbar ist/sind, umfasst.

3. Verbindungsbeschlag (10) nach Anspruch 1 oder 2, **dadurch gekennzeichnet, dass** die Einraststruktur auf mindestens einer Außenschmalseite (36, 38) der Befestigungsschiene (32) eine Reihe von nebeneinander angeordneten Rastzähnen (34) umfasst.

4. Verbindungsbeschlag (10) nach einem der Ansprüche 1 bis 3, **dadurch gekennzeichnet, dass** die elastischen Rastnasen (52, 54) mittig auf jeder Außenschmalseite (44, 46) des Rastelements (40) in Durchbrüchen (48, 50) angeordnet und im entriegelten Zustand nach außen über die Außenkontur des Rastelements (40) hinaus elastisch verbiegbar sind.

5. Verbindungsbeschlag (10) nach einem der vorangehenden Ansprüche, **dadurch gekennzeichnet, dass** das Verschlußelement (66) am vorderen Ende innen zu beiden Außenschmalseiten (78, 80) hin Freimachungen (82, 84) aufweist und sich die Rastnasen (52, 54) in der ersten Verrastungsposition im Bereich der Freimachungen (82, 84) befinden.

6. Verbindungsbeschlag (10) nach einem der vorangehenden Ansprüche, **dadurch gekennzeichnet, dass** das Verschlußelement (66) auf seiner oberen Innenseite mindestens eine Rastnase (74) aufweist und das Rastelement (40) auf seiner oberen Außenseite (58) zwei in Längsrichtung beabstandete zu der mindestens einen Rastnase (74) komplementäre Einraststrukturen (60, 62, 64) zum Einrastenlassen der mindestens einen Rastnase (74) in der jeweiligen ersten bzw. zweiten Verrastungsposition aufweist.

7. Verbindungsbeschläge (10) nach einem der vorangehenden Ansprüche, **dadurch gekennzeichnet, dass** das Befestigungselement (12) und/oder das Rastelement (40) und/oder das Verschlußelement (66) aus Kunststoff ist/sind.
